Europäisches Patentamt

European Patent Office

Office européen des brevets

(19)

(11) Publication number: **0 198 557**
**A1**

(12) # EUROPEAN PATENT APPLICATION

(21) Application number: **86200623.6**

(22) Date of filing: **14.04.86**

(51) Int. Cl.⁴: **G 01 B 11/30,** G 01 B 11/02

(30) Priority: **15.04.85 NL 8501100**

(43) Date of publication of application: **22.10.86**
**Bulletin 86/43**

(84) Designated Contracting States: **BE DE FR GB IT NL SE**

(71) Applicant: **B.V. Optische Industrie "De Oude Delft", Van Miereveltlaan 9, NL-2612 XE Delft (NL)**

(72) Inventor: **Cuelenaere, Augustinus Joannes, Melchior Treublaan 18, NL-2313 VG Leiden (NL)**

(74) Representative: **Smulders, Theodorus A.H.J. et al, Vereenigde Octrooibureaux Nieuwe Parklaan 107, NL-2587 BP 's-Gravenhage (NL)**

(54) A method and system for measuring the roughness profile of a surface.

(57) A method and system for measuring the roughness profile of a surface, in which a light beam is projected from a light source via an optical system onto the surface to form a light spot and is so focussed that the light spot continuously traverses a predetermined track, with the surface intersecting this track, and in which the amount of light reflected by the surface is measured.

EP 0 198 557 A1

A method and system for measuring the roughness profile of a surface.

The invention relates to a method and a system for measuring the roughness profile of a surface.

There are many instances in which one is interested in the roughness of a surface, for example the roughness of a mechanically worked surface. This surface roughness is usually inspected by eye, whether or not under magnification by means of, for example, a microscope. Self-evidently, such an inspection will depend highly on the experience of the inspector and is really neither reliable nor accurate. A further known method of inspecting the surface roughness is to mechanically scan the surface the roughness profile of which is to be determined. However, this method is time consuming and, in general, it will not be possible to perform it on the spot where the mechanical working of the surface is being performed.

It is an object of the invention to provide a method and a system for the entirely automatic measurement of the roughness profile of a surface. Such an automatic measurement of the roughness profile not only results in a substantial enhancement of the accuracy, reproducibility and speed of the measurement but can further be used to advantage for determining the wear of the tools used for working the surface to be inspected. For example, when turning off a metallic shaft to precision by means of a cutting tool, the roughness characteristics exhibited by the surface of the shaft will vary as the tool surface wears down and the tool edge becomes damaged. An automatic measurement of the roughness profile permits a signal indicative of an unallowable degree of tool wear to be automatically generated in response to a roughness characteristic of the surface worked with the tool exceeding a predetermined tolerance limit.

The present invention provides a method for measuring the roughness profile of a surface, in which a light beam is projected from a light source via an optical system onto the surface to form a light spot and is so focussed that the light spot continuously traverses a predetermined track, with the surface intersecting this track, and the amount of light reflected by the surface is measured.

An optical system of varying focal distance is used for causing the place of the beam focus to vary. A varying focal distance can be realized, for example, by means of a lens having a variable focal distance as disclosed in Dutch patent application 85,01101, or by varying the position of a lens having a fixed focal distance. To this end, for example, a small lens can be moved by means of a piezoelectric element through a distance of some millimeters at a frequency as high as some dozens of cycles per second. For smaller distances a higher frequency is possible.

The invention further provides a system for measuring the roughness profile of a surface, comprising a light source, an optical system of varying focal distance for causing the place of the focussed image of the light source to traverse continuouly a predetermined track, and means for measuring the light reflected by the surface the roughness profile of which is to be measured, which surface is mounted to intersect the predetermined track.

The invention will be described in greater detail hereinafter with reference to the accompanying drawings, in which:

Fig. 1 is a schematic illustration of an embodiment of the system according to the invention;

Fig. 2 is an enlarged view of track $L_1$-$L_2$ of Fig. 1;

Fig. 3 is a graphical representation of the light intensity values measured by means of the system of Fig. 1;

Fig. 4 is a schematic illustration of an arrangement allowing the wear of a cutting tool to be measured; and

Fig. 5 is a block diagram of an embodiment of a system for measuring cutting tool wear in the arrangement of Fig. 4.

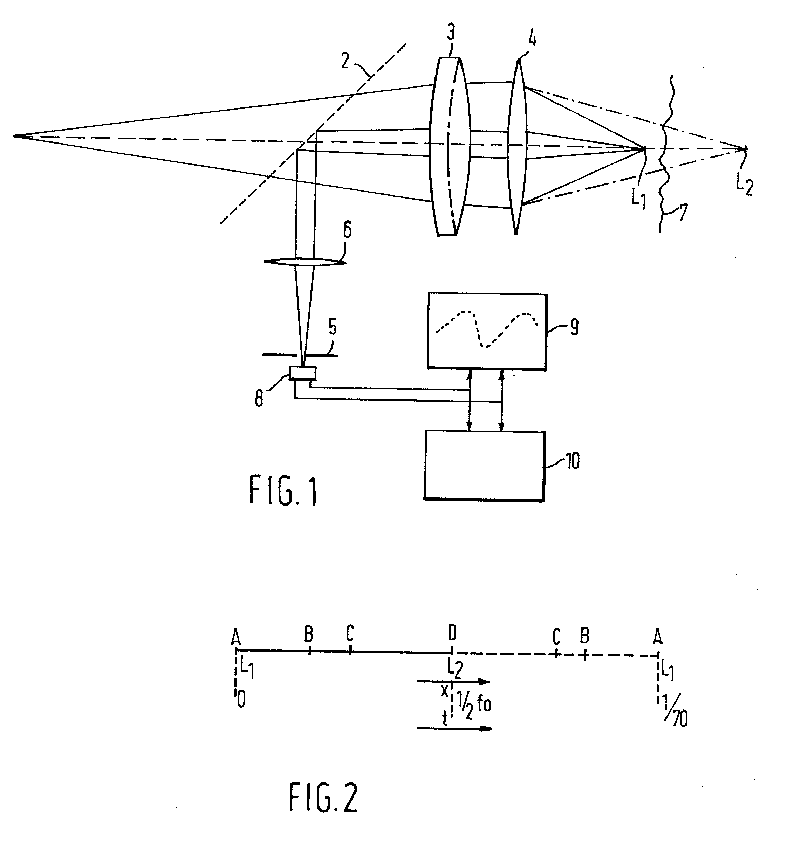

Fig. 1 schematically shows the system according to the invention for measuring the roughness profile.

The system comprises a light source 1 being imaged through a semitransparent mirror 2, a lens 3 of variable focal distance and a biconcave spherical lens 4, at a point between positions $L_1$ and $L_2$ situated on the optical axis of the system. The system further comprises an optically non-transparent plate 5 having a small aperture, a so-called pinhole, therein. This pinhole is likewise being imaged through a biconcave spherical lens 6, the semitransparent mirror 2 and lenses 3 and 4 at a point on track $L_1$-$L_2$, which point is that where light source 1 is imaged.

The imaging of light source 1 results in a light spot of small diameter being formed on track $L_1$-$L_2$. The place where this light spot is focussed depends on the focal distance of lens 3 and can be caused to traverse track $L_1$-$L_2$ by a suitable dimensioning of this lens. The position of the focussed image of light source 1 on track $L_1$-$L_2$ can be changed either by varying the focal distance of lens 3, as illustrated in Fig. 1 by a chain-dotted line, or by changing the position of a lens of fixed focal distance. The latter possibility has not been shown in the drawings.

Lens 3 can be made to have a variable focal distance by, for example, forming its forwards face of a flexible foil of controllable convexity. The focal distance of the lens can then be changed by, for example, varying the pressure exerted on the flexible foil by a fluid contained in the lens.

The surface 7 the roughness profile of which is to be measured is placed between positions $L_1$ and $L_2$. The light spot constituting the image of light source 1 is reflected by this surface, and the reflected light is projected via lenses 4 and 3, semitransparent mirror 2, lens 6 and the pinhole to be incident on a photosensitive element 8. The amount of light measured has a maximum value when the image of light source 1 is focussed at surface 7 and decreases as the place of the focussed image of light source 1 is farther remote from surface 7.

The output signal of photosensitive element 8 can be reproduced on a display device 9 and can be processed by a signal processor 10 for achieving a measuring signal that is indicative of the roughness of surface 7. The height of roughnesses on the surface can be determined, for example, by comparing the position of the portion of the surface reflecting light from light source 1 on track $L_1$-$L_2$ in Fig. 1 to a reference position of a completely smooth surface on track $L_1$-$L_2$, whereby the profile height can be determined. An example of a signal processor by means of which the roughness of surface 7 can be measured will be described in greater detail later on.

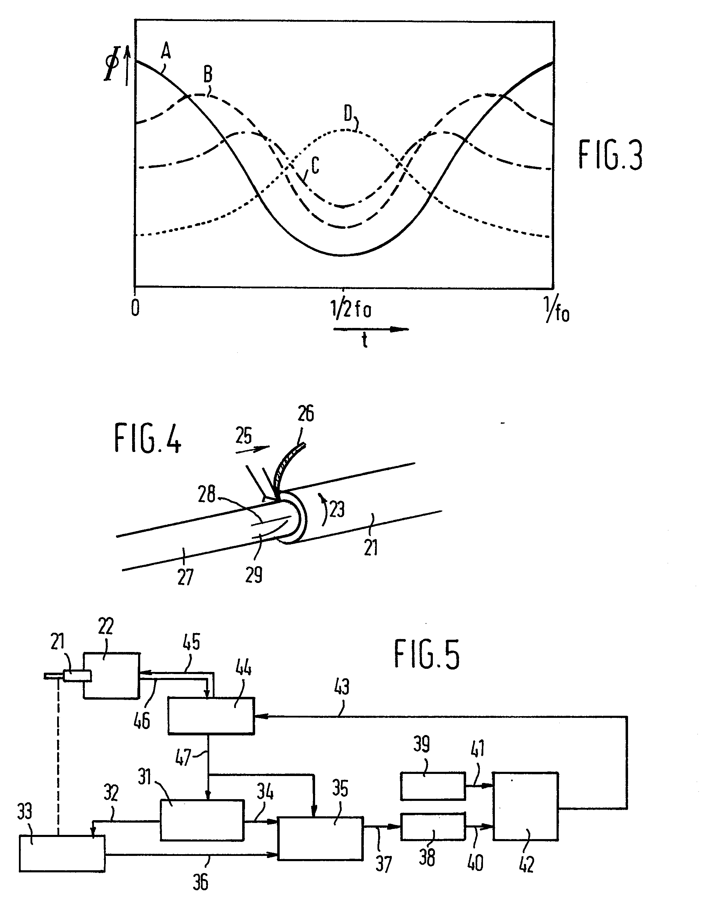

The manner in which the position of the focussed image of light source 1 on track $L_1$-$L_2$ is related to

the position of surface 7 on this track will be explained with reference to Figs. 2 and 3.

For measuring the roughness profile, the focal distance of lens 3 is varied periodically so that the focussed image of light source 1 reciprocates periodically between $L_1$ and $L_2$. Assuming the time required for the focussed image to move from $L_1$ to $L_2$ and back to $L_1$ to be $t_o$, the frequency at which the focal distance is varied will be $f_o = 1/t_o$ Hz.

Fig. 2 shows track $L_1 \longrightarrow L_2$ in a continuous line and track $L_2 \longrightarrow L_1$ in a broken line. Surface 7 reflecting the light spot is assumed to be successively situated at positions A, B, C and D. The time t is plotted horizontally.

Fig. 3 illustrates the change in the light intensity $\phi$ measured by photosensitive element 8 as a function of the time t, with the surface situated at each of positions A-D respectively. The position of the maximum values of the light intensity relative to t = 0 is decisive for determining the position of surface 7 on track $L_1$-$L_2$. For example, when the surface is in position A, the amount of reflected light has a maximum at t = 0 and t = $1/f_o$ as the light spot is focussed at point A at these two points of time. Similarly, when the surface is in position D, the intensity has a maximum at t = $1/2f_o$ as the light spot is focussed at point D at that point of time. As shown in Fig. 3, similar variations in the light intensity are obtained for intermediate positions of the surface, such as positions B and C.

Fig. 4 schematically shows a system in which the wear of a cutting tool can be determined by measuring the roughness profile of a workpiece, such as a shaft, machined by the tool.

Workpiece 21 is being rotated into the direction of arrow 23 on a lathe (not shown). A cutting tool 24 removes material from workpiece 21 by slowly advancing into the direction of arrow 25 during the rotation of workpiece 21, thereby forming a cutting 26. The concurrent rotation of workpiece 21 and advancement of tool 24 cause a helical pattern to be formed on the surface 27 of workpiece 21. The roughness of surface 27 in the direction of the helix is substantially less than the roughness of surface 27 in the direction of a line 28 extending normal to the helix or in the direction of a line 29 extending at an angle to the helix. For a sufficiently reliable measurement of the roughness profile caused by tool 24, line 28 or 29 should extend over a number of turns of the helix.

Fig. 5 shows a block diagram of an electronic processing device suitable for determining the wear of cutting tool 24 of Fig. 4, which tool is mounted in a lathe 22.

This device comprises a control signal generator

0198557

31 supplying control signals through a signal line 32 to an optical detector 33. This optical detector may be the system shown in Fig. 1. A correlator 35 receives through a signal line 34 the same output signal from signal generator 31. Correlator 35 further receives through a signal line 36 the output signal from optical detector 33, which output signal represents the measured profile height of surface 27 relative to a reference surface. Correlator 35 correlates the signals received through signal lines 34 and 36 with each other and applies the resultant correlated signal through a signal line 37 to a characterizing unit 38. Characterizing unit 38 determines one or more characteristic quantities pertaining to surface 27 from the output signal of correlator 35, which quantities are relevant for determining the state of the cutting edge of tool 24.

The device further comprises a reference signal generator 39 for generating signals that are similar to the output signals of characterizing unit 38 and that form a reference signal to which the output signals of unit 38 can be compared. Characterizing unit 38 and generator 39 are connected through lines 40 and 41, respectively, to a decider unit 42. The output of decider unit 42 is connected through a line 43 to an input of a control circuit 44 for lathe 22.

Control circuit 44 is connected through lines 45 and 46 to lathe 22. Control circuit 44 can deactivate lathe 22 via line 45, while lathe 22 can supply signals indicative of the instantaneous angular position of workpiece 21 during the machining to control circuit 44 via line 46. If desired, control circuit 44 may be so arranged that such angular signals are generated by this circuit itself. Control circuit 44 is connected through a line 47 to control signal generator 31 and correlator 35 to apply signals corresponding to the angular position signal to these components.

The processing device shown in Fig. 5 operates as follows.

After lathe 22 has been activated and tool 24 has contacted workpiece 21, control circuit 44 generates a signal activating control signal generator 31 and correlator 35 via line 47. Control circuit 44 supplies signals through line 47 that correspond to the instantaneous angular position of workpiece 21.

Each time workpiece 21 occupies a predetermined angular position, detector 33 performs a measurement of the profile height of surface 27 relative to a reference surface. The control signals required therefor are supplied by generator 31 through line 32 to detector 33. Detector 33 may move in synchronism with tool 24 along workpiece 21, but this is not imperative.

Generator 31 further supplies control signals to detector 33 that are necessary for determining the profile height. Correlator 35 receives signals through line 34 that correspond to the signals supplied via line 32 and further receives the output signal from detector 33 through line 36. Correlator 35 combines these signals to produce at its output a signal that is representative of the profile height as well as the appurtinent point on surface 27. To be able to form this signal, correlator 35 further receives the angular position signals through line 47.

In dependence upon the points of time at which the profile height measurements are performed, the points on surface 27 the profile height of which is being measured may be situated on a straight line or on a line of different shape, such as for example line 28 or line 29 in Fig. 4.

Characterizing unit 38 determines one or more characteristic quantities of the profile from the output signals of correlator 35 representing the profile of surface 27 along, for example, line 28 or line 29. These characteristic quantities serve as roughness indications, i.e., indications on the basis of which the roughness of a surface can be characterized. Examples of characteristic quantities are the greatest profile height or depth, the greatest steepness occurring in the profile, the number of tops/valleys of the profile per unit of length, etc.

Decider unit 42 compares the values for the relevant quantities as generated by characterizing unit

0198557

38 to standardized values for these quantities as generated by reference signal generator 39.

If the measured values do not exceed the standardized values, no action is taken as the tool wear is then still within the accepted tolerance range. However, if one or more of the standardized values are exceeded indeed, decider unit 42 will generate a deactivation signal to be applied through line 43 to control circuit 44. This circuit responds to this signal by deactivating lathe 22 via line 45 and producing an alarm signal for notifying the lathe operator of the fact that the roughness of surface 27 differs from the standard to such an extent that the cutting tool has to be either replaced or sharpened. The deactivation signal at line 43 may also be used for actuating an automatic tool-changing unit. In that case, the machining procedure is automatically resumed after the tool has been changed.

In accordance with a modification of the embodiment of the processing device shown in Fig. 5, line 46 may be omitted while line 47 leads from a circuit generating location signals, which signals are indicative of the location of the point where the profile height on line 28 or line 29 has to be measured. In this modification, a profile measurement on one of these two lines is performed only after the machining procedure has been discontinued.

## CLAIMS

1. A method for measuring the roughness profile of a surface, characterized in that a light beam is projected from a light source via an optical system onto the surface to form a light spot and is so focussed that the light spot continuously traverses a predetermined track, with the surface intersecting said track, and the amount of light reflected by the surface is measured.

2. A method according to claim 1, characterized in that said light spot is caused to traverse said track by the variation of the focal distance of said optical system.

3. A method according to claim 2, characterized in that the position of at least one lens of said optical system is varied.

4. A method according to claim 2, characterized in that the focal distance of at least one lens of said optical system is varied.

5. A method according to at least one of the preceding claims, characterized in that the roughness profile is measured by comparing the amount of light reflected by said surface to the amount of light reflected by a reference surface.

6. A system for measuring the roughness profile of a surface, characterized by a light source, an optical system of varying focal distance for causing the place of the focussed image of said light source to traverse continuously a predetermined track, and means for measuring the light reflected by the surface the roughness profile of which is to be measured, which surface is mounted to intersect said predetermined track.

7. A system according to claim 6, characterized by a first optical path including said light source, a semitransparent mirror and an optical system of varying focal distance, and by a second optical path including a member for measuring the amount of light reflected by said surface, a non-transparent plate member having a small aperture therein, at least one lens, said semitransparent mirror and said optical system of varying focal distance.

8. A system according to claim 6 or 7, characterized in that said optical system of varying focal distance is coupled to means for varying the position of at least one lens of said optical system.

9. A system according to claim 6 or 7, characterized in that said optical system includes at least one lens the focal distance of which can be varied.

10. A method for measuring the wear of a cutting tool by means of the method according to at least one of claims 1-5, characterized in that the roughness profile of a surface machined by said tool is measured and the value of a characteristic quantity of the roughness profile as derived therefrom is compared to a predetermined value, and a signal is generated when said value derived from the measured roughness profile exceeds said predetermined value.

11.     A method according to claim 10, characterized
in that the roughness profile is measured along a line
extending parallel with the longitudinal axis of the
workpiece the roughness profile of which is to be measured.

12.     A method according to claim 10, characterized
in that the roughness profile is measured along a line
extending at an angle to the longitudinal axis of the
workpiece the roughness profile of which is to be measured.

0198557

FIG.1

FIG.2

0198557

FIG.3

FIG.4

FIG.5

**European Patent Office**

**EUROPEAN SEARCH REPORT**

EP 86 20 0623

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 322 712 (DAIMLER-BENZ) * Claims 1-3; page 3, line 12 - page 12, line 16; page 9, lines 9-11; figures * | 1-9 | G 01 B 11/30 G 01 B 11/02 |
| Y |  | 10-12 | |
| Y | US-A-3 025 747 (PHILIP MORRIS INC) * Column 2, line 40 - column 7, line 48; figures 2,3 * | 10-12 | |
| X | GB-A-2 144 537 (G. MOLESINI) * Whole document, particularly figure 1, page 1, line 118 - page 2, line 7 * | 1-3,6-8 | |
| Y | DE-A-3 322 709 (DAIMLER-BENZ) * Whole document * | 1-9 | **TECHNICAL FIELDS SEARCHED (Int. Cl.4)** G 01 B 11/00 |
| Y | US-A-4 115 005 (R. MURATA) * Column 1, line 5 - column 4, line 9 * | 1-9 | |
| A | US-A-3 612 890 (W.S. CORNYN) * Column 1, line 65 - column 9, line 9; figures * | 1-3,5,6,10-12 | |
|  | --- -/- | | |

The present search report has been drawn up for all claims

| Place of search | Date of completion of the search | Examiner |
|---|---|---|
| THE HAGUE | 24-06-1986 | BROCK T.J. |

| | DOCUMENTS CONSIDERED TO BE RELEVANT | | Page  2 | |
|---|---|---|---|---|
| Category | Citation of document with indication, where appropriate, of relevant passages | Relevant to claim | CLASSIFICATION OF THE APPLICATION (Int. Cl.4) | |
| A | US-A-3 263 087  (G. GOLDMAN et al.)<br>* Column  1, line 35 - column 4, line 56 * | 1,5-7, 10 | | |
| | ----- | | | |
| | | | TECHNICAL FIELDS SEARCHED (Int. Cl.4) | |
| | The present search report has been drawn up for all claims | | | |

| Place of search | Date of completion of the search | Examiner |
|---|---|---|
| THE HAGUE | 24-06-1986 | BROCK T.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03.82